# EUROPÄISCHE PATENTSCHRIFT

(11) **EP 2 830 914 B1**
(45) Veröffentlichungstag und Bekanntmachung des Hinweises auf die Patenterteilung: **16.03.2016**
(21) Anmeldenummer: 13711290.0
(22) Anmeldetag: 21.03.2013
(51) Int. Cl.: B60R 21/38

(54) **FUSSGÄNGERSCHUTZEINRICHTUNG FÜR EIN KRAFTFAHRZEUG**
PEDESTRIAN PROTECTING DEVICE FOR A VEHICLE
DISPOSITIF DE PROTECTION DES PIÉTONS POUR VÉHICULE

(30) Priorität: 29.03.2012 DE 102012006496
(43) Veröffentlichungstag der Anmeldung: 04.02.2015
(73) Patentinhaber: Audi AG, 85045 Ingolstadt (DE)
(72) Erfinder: SCHABENBERGER, Richard, 85126 Münchsmünster (DE); MAYRHOFER, Günther, 85077 Oberstimm (DE)
(74) Vertreter: Mader, Wilfried
(86) Internationale Anmeldenummer: PCT/EP2013/000858
(87) Internationale Veröffentlichungsnummer: WO 2013/143669

(56) Entgegenhaltungen:
- EP-A1- 1 555 171
- DE-A1-102010 021 687
- DE-U1- 20 216 240

## Beschreibung

Die Erfindung betrifft eine Fußgängerschutzeinrichtung für ein Kraftfahrzeug gemäß dem Oberbegriff des Patentanspruchs 1.

Eine verstellbare Fußgängerschutzeinrichtung, die insbesondere im Frontbereich eines Personehkraftfahrzeugs angeordnet ist, ist allgemein bekannt. Bei einer detektierten Kollision mit einem Fußgänger oder Zweiradfahrer hat die Fußgängerschutzeinrichtung die Aufgabe, eine crashaktive Frontklappe im Bereich der Windschutzscheibe über einen oder mehrere pyrotechnisch gesteuerte Aktuatoren schnell in eine gegenüber einer Karosserie des Kraftfahrzeugs angehobene Schutzstellung zu bewegen und in der Schutzstellung zu halten. Die in der Schutzstellung fixierte Frontklappe dient als aufprallenergieabsorbierendes Deformationselement und soll den Aufprall einer Person auf die Frontklappe dämpfen und so das Ausmaß bzw. das Risiko einer Verletzung der Person beim Aufprall auf die Frontklappe reduzieren.

Aus der EP 1555171 ist eine Fussgängerschutzeinrichtung für ein Kraftfahrzeug nach dem Oberbegriff des Anspruchs 1 bekannt.

Aus der DE 10 2010 021 687 A1 ist eine Fußgängerschutzeinrichtung für ein Kraftfahrzeug bekannt. Die Fußgängerschutzeinrichtung umfasst eine über mindestens eine Kopplungseinrichtung mit einer Karosserie des Kraftfahrzeugs verbundene Frontklappe und mindestens eine Stelleinrichtung, durch welche die Frontklappe über mindestens einen Aktuator in eine gegenüber der Karosserie des Kraftfahrzeugs angehobene Schutzstellung bewegbar und in der Schutzstellung fixierbar ist. Der mindestens eine Aktuator ist jeweils über ein Kugelgelenk mit der korrespondierenden Kopplungseinrichtung und der Frontklappe verbunden, wobei das Kugelgelenk einen Gelenkkopf und eine den Gelenkkopf aufnehmende Gelenkpfanneneinheit umfasst, welche eine Gelenkpfanne und ein die Gelenkpfanne zumindest teilweise umschließendes Sicherungselement aufweist. Hierbei sind ein Gelenkkopf des ersten Kugelgelenks mit der Frontklappe und ein Gelenkkopf des zweiten Kugelgelenks mit der Stelleinrichtung der Karosserie des Kraftfahrzeugs verschraubt. Die Kugelgelenke umfassen Gelenkköpfe, die vollständig in aufnehmenden Gelenkpfannen der Gelenkpfanneneinheit aufgenommen und durch ein umschließendes Sicherungselement gesichert sind. Die Kontrolle der verschraubten Gelenkköpfe erfolgt durch Prüfung des Anzugdrehmoments der Verschraubung vor bzw. nach der Montage des Aktuators.

Die Aufgabe der Erfindung ist es, eine Fußgängerschutzeinrichtung für ein Kraftfahrzeug zu schaffen, welche eine einfache und sichere Montage des Aktuators an der Karosserie des Kraftfahrzeugs ermöglicht.

Erfindungsgemäß wird die Aufgabe durch Bereitstellung einer Fußgängerschutzeinrichtung für ein Kraftfahrzeug mit den Merkmalen des Patentanspruchs 1 gelöst. Vorteilhafte Ausführungsformen und Weiterbildungen der Erfindung sind in den abhängigen Ansprüchen angegeben.

Um eine Fußgängerschutzeinrichtung für ein Kraftfahrzeug zu schaffen, welche eine einfache und sichere Montage des Aktuators an der Karosserie des Kraftfahrzeugs ermöglicht, weist der erfindungsgemäße Gelenkkopf einen Gelenkkopfendbereich auf, der mit einer Ausnehmung in der Gelenkpfanneneinheit sichtbar zusammenwirkt. Ein wesentlicher Vorteil der Erfindung besteht darin, dass durch eine optische Kontrolle besonders einfach und schnell der korrekte bzw. ordnungsgemäße Einbau des erfindungsgemäßen Gelenkkopfs überprüft werden kann. In vorteilhafter Weise kann gegenüber der herkömmlichen Ausführung, bei welcher der Gelenkkopf vollständig in der Gelenkpfanne aufgenommen ist, die Montage und die Kontrolle des erfindungsgemäßen Gelenkkopfs werkzeuglos erfolgen, wodurch die Kontrollzeit und damit die Montagekosten deutlich gesenkt werden können. Eine eventuell fehlerhafte Montage der Befestigung des Gelenkkopfs in der Gelenkpfanneneinheit kann optisch schnell erkannt und rasch werkzeuglos behoben werden.

In vorteilhafter Ausgestaltung der erfindungsgemäßen Fußgängerschutzeinrichtung kann der Gelenkkopfendbereich gegenüber dem Sicherungselement nach außen einen Überstand aufweisen. Hierdurch kann der Gelenkkopfendbereich bei einer Sichtkontrolle optisch besonders gut erkannt werden und den korrekten Einbau des Gelenkkopfs in der Gelenkpfanneneinheit anzeigen. Weist der Gelenkkopfendbereich gegenüber dem Sicherungselement nach außen keinen Überstand auf, ist der Gelenkkopf nicht korrekt in der Gelenkpfanneneinheit montiert. Bei der Montage des Aktuators kann der sichtbare Überstand des Gelenkkopfendbereichs somit auf eine einfache konstruktive Weise sofort einen optischen Hinweis über den Zustand der montierten Verbindung anzeigen.

In weiterer vorteilhafter Ausgestaltung der erfindungsgemäßen Fußgängerschutzeinrichtung kann der Gelenkkopfendbereich des Gelenkkopfs einen runden Querschnitt aufweisen, wobei der Gelenkkopfendbereich beispielsweise kegelförmig oder zylindrisch ausgebildet werden kann. In vorteilhafter Weise kann der Gelenkkopf mit einem achssymmetrischen runden Querschnitt des Gelenkkopfendbereichs besonders leicht als Kaltfließpressteil hergestellt werden und eine einfache Montage des Gelenkkopfs ermöglichen. Durch die Herstellung als Kaltfließpressteil kann in vorteilhafter Weise eine ausreichende Festigkeit erzielt werden. Somit kann der technisch verbesserte Gelenkkopf besonders kostengünstig hergestellt und montiert werden.

In weiterer vorteilhafter Ausgestaltung der erfindungsgemäßen Fußgängerschutzeinrichtung können der Gelenkkopf und die den Gelenkkopf aufnehmende Gelenkpfanneneinheit als Steckverbindung ausgeführt werden. Dies ermöglicht in vorteilhafter Weise eine besonders schnelle und einfache Endmontage des Kopplungsgelenks, welches zudem konstruktiv einfach gestaltet ist und dadurch wirtschaftlich bzw. kostengünstig hergestellt werden kann. Bei Reparaturarbeiten an der Frontklappe oder beim Austausch des Aktuators ermöglicht die Steckverbindung eine schnelle Demontage des Aktuators.

In weiterer vorteilhafter Ausgestaltung der erfindungsgemäßen Fußgängerschutzeinrichtung kann die Steckverbindung formschlüssig und/oder kraftschlüssig ausgeführt werden. Das hat den Vorteil, dass der Gelenkkopf optimal in der Gelenkpfanneneinheit gelagert werden kann, und dass bei einer Aktivierung des Aktuators im Crashfall große Kräfte zuverlässig bzw. sicher über die formschlüssige und/oder kraftschlüssige Steckverbindung des Aktuators übertragen werden können.

In weiterer vorteilhafter Ausgestaltung der erfindungsgemäßen Fußgängerschutzeinrichtung kann der Gelenkkopfendbereich mit der Ausnehmung der Gelenkpfanne und mit der Ausnehmung des Sicherungselements zumindest teilweise eine formschlüssige Verrastung aufweisen. In vorteilhafter Weise kann der Gelenkkopfendbereich zusätzlich zur optischen Sichtkontrolle gleichzeitig eine Funktion als Arretierungselement des Gelenkkopfs in der Gelenkpfanne und eine weitere Funktion als lagestabilisierendes Anschlagelement für das Sicherungselement in axialer Richtung des Aktuators erfüllen. Dadurch kann eine besonders platzsparende und besonders belastbare Mehrfachverbindung des Kopplungsgelenks realisiert werden, welche auf Grund ihrer kompakten Bauweise auch in Fahrzeugen mit geringen Platzverhältnissen montiert werden kann, ohne die Maße der Karosserie verändern zu müssen.

In weiterer vorteilhafter Ausgestaltung der erfindungsgemäßen Fußgängerschutzeinrichtung kann die Gelenkpfanne am Außenumfang zwei sich gegenüberliegend angeordnete und in Richtung einer Mittellängsachse verlaufende Schlitze aufweisen, in welche abgewinkelte Enden des Sicherungselements einrasten können. In vorteilhafter Weise kann der Gelenkkopfendbereich des Gelenkkopfs am Außenumfang mindestens eine radial umlaufende Vertiefung aufweisen, in welche ein am Innenumfang des Sicherungselements radial umlaufender Verriegelungsring einrastet. Dadurch kann auf eine einfache konstruktive Weise ein Sicherungselement ohne großen Widerstand in die richtige Position zum Gelenkkopf bauraumsparend auf die Gelenkpfanne montiert und gelagert werden. Sowohl die schlitzaufweisende Gelenkpfanne als auch das vertiefungsaufweisende Sicherungselement können kostengünstig als Massenteil hergestellt werden, wobei die Gelenkpfanne auf Grund der axial angeordneten Schlitze in einem einfachen Spritzgießwerkzeug und das vertiefungsaufweisende Sicherungselement spanend als Drehteil oder als Kaltfließpressteil hergestellt werden kann..

In weiterer vorteilhafter Ausgestaltung der erfindungsgemäßen Fußgängerschutzeinrichtung kann die Gelenkpfanne eine am Außenumfang radial umlaufende Arretierungsausnehmung aufweisen, in welcher das Sicherungselement formschlüssig und/oder kraftschlüssig axial arretiert ist. In vorteilhafter Weise kann die Gelenkpfanne zur Aufnahme des Sicherungselements eine am Innenumfang radial umlaufende Arretierungsausnehmung aufweisen, in welcher eine radial umlaufende Auswölbung des Sicherungselements formschlüssig und/oder kraftschlüssig gelagert und axial arretiert ist. Das hat den Vorteil, dass das Sicherungselement nach der Montage des Gelenkkopfs in der Gelenkpfanne eine axial definierte Position einnehmen kann, in welcher das Sicherungselement den Gelenkkopf bzw. der Gelenkkopf das Sicherungselement partiell umschließt und somit eine dauerhafte belastbare Verbindung bilden kann. Aufgrund der federnden Wirkung des Sicherungselements und der eingerasteten Lage in der Arretierungsausnehmung kann sich das Sicherungselement selbständig nicht verschieben.

In weiterer vorteilhafter Ausgestaltung der erfindungsgemäßen Fußgängerschutzeinrichtung kann das Kopplungsgelenk des Aktuators mit der Kopplungseinrichtung und mit der Frontklappe als Steckverbindung ausgeführt werden. Dadurch kann in vorteilhafter Weise eine schnelle und belastbare Verbindung zwischen zwei zueinander beweglichen Bauteilen realisiert werden. Solche Kopplungsgelenke können kostengünstig und robust hergestellt werden.

Vorteilhafte Ausführungsformen der Erfindung sind in den Zeichnungen dargestellt und werden nachfolgend beschrieben.

Dabei zeigen:
- Fig. 1: eine perspektivische Darstellung der erfindungswesentlichen Teile einer erfindungsgemäßen Fußgängerschutzeinrichtung für ein Kraftfahrzeug mit einer Kopplungseinrichtung und einer Stelleinrichtung,
- Fig. 2: eine perspektivische Darstellung eines ersten Ausführungsbeispiels eines Endbereichs der Stelleinrichtung aus Fig. 1 vor der Montage des Kopplungsgelenks,
- Fig. 3: eine perspektivische Darstellung der Stelleinrichtung aus Fig. 2 nach einer korrekten Montage des Kopplungsgelenks mit einem sichtbarem Überstand des Gelenkkopfendbereichs,
- Fig. 4: eine perspektivische Darstellung der Stelleinrichtung aus Fig. 2 mit falsch montiertem Kopplungsgelenk ohne Überstand des Gelenkkopfendbereichs,
- Fig. 5: eine perspektivische Darstellung des ersten Ausführungsbeispiels der Gelenkpfanneneinheit, bestehend aus einer Gelenkpfanne und einem die Gelenkpfanne umschließenden Sicherungselement,
- Fig. 6: eine schematische Schnittdarstellung eines zweiten Ausführungsbeispiels eines Kopplungsgelenks mit einer Gelenkpfanne und einem Sicherungselement vor der Montage des Kopplungsgelenks,
- Fig. 7: eine schematische Schnittdarstellung des zweiten Ausführungsbeispiels aus Fig. 6 am Anfang der Montage in einem nicht verriegelten Zustand,
- Fig. 8: eine schematische Schnittdarstellung des zweiten Ausführungsbeispiels aus Fig. 7 mit dem Sicherungselement in einer ersten Verriegelungsstellung, und
- Fig. 9: eine schematische Schnittdarstellung des zweiten Ausführungsbeispiels aus Fig. 7 nach einer korrekten Montage des Kopplungsgelenks in einer zweiten Verriegelungsstellung des Sicherungselements mit einem sichtbarem Überstand des Gelenkkopfendbereichs.

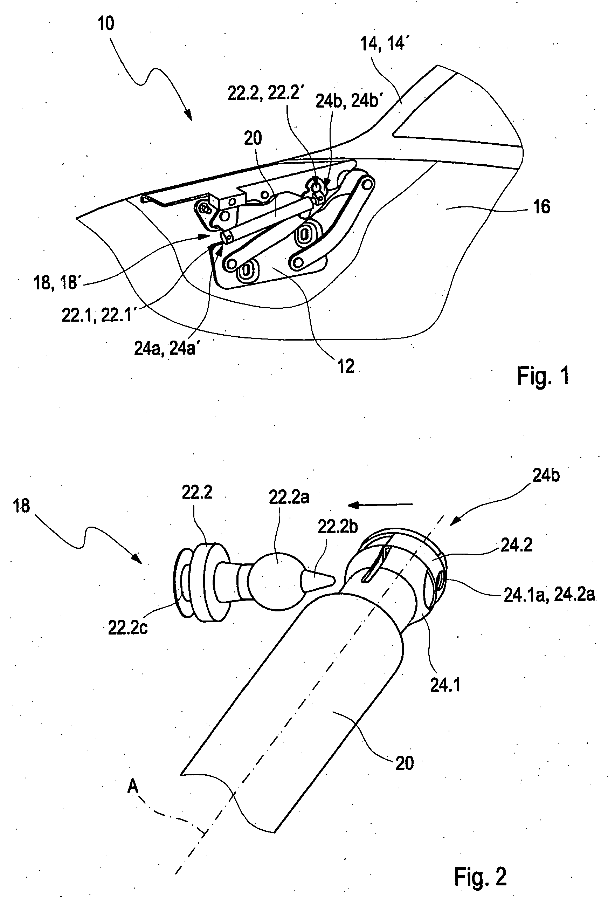

Fig. 1 bis 9 zeigen erfindungswesentliche Teile einer Fußgängerschutzeinrichtung 10 für ein Kraftfahrzeug mit einer über eine Kopplungseinrichtung 12 mit einer Karosserie 14, 14' des Kraftfahrzeugs verbundenen Frontklappe 16 und einer Stelleinrichtung 18, 18'. In der Regel sind auf beiden Längsseiten der Frontklappe 16 eine solche Kopplungseinrichtung 12 und eine zugehörige Stelleinrichtung 18, 18' angeordnet, um die Frontklappe 16 beweglich mit der Kraftfahrzugkarosserie 14, 14' zu koppeln. Im dargestellten Ausführungsbeispiel bewegt die Stelleinrichtung 18, 18' die Frontklappe 16 über einen Aktuator 20 in eine gegenüber der Karosserie 14, 14' des Kraftfahrzeugs angehobene Schutzstellung und fixiert diese in der Schutzstellung. Der Aktuator 20 kann an beiden Enden jeweils über ein Kopplungsgelenk 22.1, 22.1', 22.2, 22.2' mit der Kopplungseinrichtung 12 und der Frontklappe 16 verbunden werden, wobei das Kopplungsgelenk 22.1, 22.1', 22.2, 22.2' einen Gelenkkopf 22.2a, 22.2a' und eine den Gelenkkopf 22.2a, 22.2a' aufnehmende Gelenkpfanneneinheit 24a, 24a', 24b, 24b' umfasst. Die Gelenkpfanneneinheit 24a, 24a', 24b, 24b' weist eine Gelenkpfanne 24.1, 24.1' und ein die Gelenkpfanne 24.1, 24.1' zumindest teilweise umschließendes Sicherungselement 24.2, 24.2', auf. Das Kopplungsgelenk 22.1, 22.1', 22.2, 22.2' stellt ein Bindeglied mit einer Drehachse zwischen dem Aktuator 20 und der Frontklappe 16 bzw. der Kopplungseinrichtung 12 dar. Alternativ kann ein Endbereich des Aktuators 20 über das erfindungsgemäße Kopplungsgelenk 22.1, 22.1', 22.2, 22.2' mit der Frontklappe 16 oder der Kopplungseinrichtung 12 verbunden sein und das gegenüberliegende andere Ende des Aktuators 20 kann in einer wannenförmigen Aufnahme gelagert bzw. auf eine herkömmliche Weise mit der Frontklappe 16 oder der Kopplungseinrichtung 12 verbunden werden. Vorzugsweise wird der Aktuator 20 der Stelleinrichtung 18, 18' pyrotechnisch aktiviert, wobei die pyrotechnischen Mittel ähnlich wie die zur Auslösung eines Airbags verwendeten Einrichtungen aufgebaut sein können. Es sind jedoch auch andere einem Fachmann als sinnvoll erscheinende Stelleinrichtungen 18, 18' zur Aktivierung des Aktuators 20 denkbar, wie beispielsweise pneumatische oder elektrische Stelleinrichtungen 18, 18'. Da bei einer Aktivierung des Aktuators 20 und bei einem anschließenden Aufprall einer Person auf die Frontklappe 16 große Kräfte und Drehmomente auf das Kopplungsgelenk 22.1, 22.1', 22.2, 22.2' wirken, muss ein korrekter Einbau des Aktuators 20 an der Karosserie 14, 14' des Kraftfahrzeugs gewährleistet sein.

Um eine Fußgängerschutzeinrichtung 10 für ein Kraftfahrzeug zu schaffen, welche eine einfache und sichere Montage des Aktuators 20 an der Karosserie 14, 14' des Kraftfahrzeugs ermöglicht, wird erfindungsgemäß vorgeschlagen, dass der Gelenkkopf 22.2a, 22.2a' einen Gelenkkopfendbereich 22.2b, 22.2b' aufweist, der mit einer Ausnehmung 24.1a, 24.1 a', 24.2a, 24.2a' in der Gelenkpfanneneinheit 24a, 24a', 24b, 24b' sichtbar zusammenwirkt. Bei den vorliegenden Ausführungsbeispielen handelt es sich bei der erfindungsgemäßen Fußgängerschutzeinrichtung 10 jeweils um ein sicherheitsrelevantes Bauteil, dessen ordnungsgemäßer Einbau während der Montage oder bei einer Endkontrolle kontrolliert und dokumentiert wird. Daher ist es besonders vorteilhaft, wenn der ordnungsgemäße bzw. korrekte Einbau des erfindungsgemäßen Gelenkkopfs, insbesondere des Gelenkkopfendbereichs 22.2b, 22.2b' des Gelenkkopfs 22.2a, 22.2a, durch eine optische Kontrolle besonders einfach und schnell überprüft werden kann.

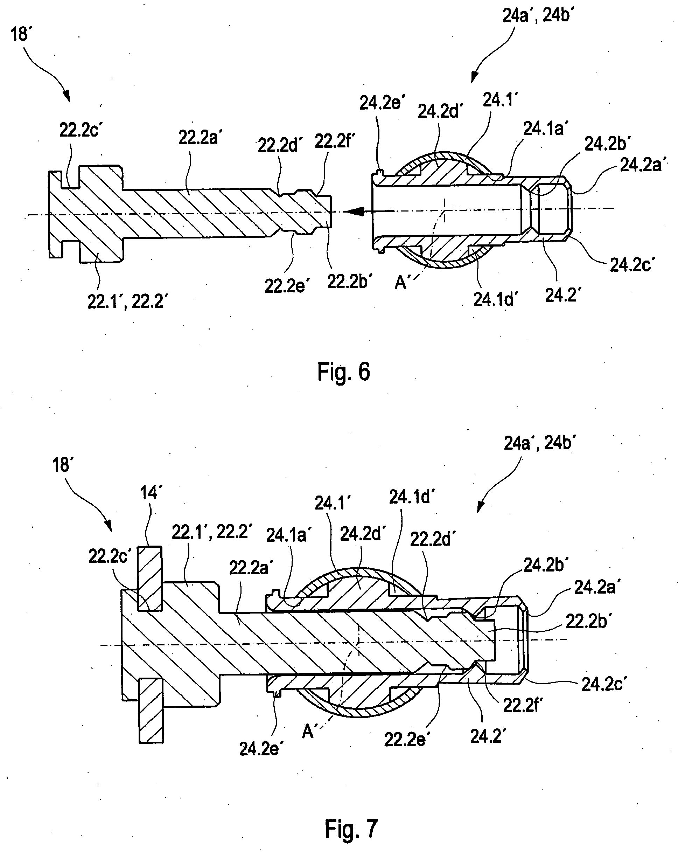

Fig. 2 und 6 zeigen jeweils in einer schematischen Darstellung ein Ausführungsbeispiel eines Endbereichs des Aktuators 20 der Stelleinrichtung 18, 18' vor der Montage des Kopplungsgelenk 22.1, 22.1', 22.2, 22.2' mit der Gelenkpfanneneinheit 24a, 24a', 24b, 24b'. Das symmetrische Kopplungsgelenk 22.1, 22.1', 22.2, 22.2' ist einstückig ausgebildet und weist in einem dem Gelenkkopf 22.2a, 22.2a' gegenüberliegenden Bereich eine radial angeordnete bzw. radial umlaufende Nut 22.2c, 22.2c' auf, über welche das Kopplungsgelenk 22.1, 22.1', 22.2, 22.2' des Aktuators 20 als Steckverbindung mit der Kopplungseinrichtung 12 und/oder mit der Frontklappe 16 verbunden wird.

Wie aus Fig. 2 und 6 weiter ersichtlich ist, weist der Gelenkkopfendbereich 22.2b, 22.2b' des Gelenkkopfs 22.2a, 22.2a' einen runden Querschnitt auf. Im ersten Ausführungsbeispiel ist der Gelenkkopfendbereich 22.2b gemäß Fig. 2 kegelförmig, und im zweiten Ausführungsbeispiel ist der Gelenkkopfendbereich 22.2b' gemäß Fig. 6 zylinderförmig ausgebildet und erleichtert durch seine zentrierende Form die Montage des Gelenkkopfs 22.2a, 22.2a' mit der Gelenkpfanneneinheit 24a, 24a', 24b, 24b'. In den vorliegenden Ausführungsbeispielen sind der Gelenkkopf 22.2a, 22.2a' und die den Gelenkkopf 22.2a, 22.2a' aufnehmende Gelenkpfanneneinheit 24a, 24a', 24b, 24b' als Steckverbindung ausgeführt, wobei die Steckverbindung formschlüssig und/oder kraftschlüssig ausgeführt werden kann.

Als sichtbares Zeichen für die korrekte Montage weist der Gelenkkopfendbereich 22.2b, 22.2b' gegenüber dem Sicherungselement 24.2, 24.2' nach außen einen Überstand H, H' auf. Der Überstand H, H' des Gelenkkopfendbereich 22.2b, 22.2b' verhindert eine axiale Bewegung des Sicherungselements 24.2, 24.2' und somit des Aktuators 20 in Richtung der Mittellängsachse A, A'. Gegenüber herkömmlichen Ausführungen eines Gelenkkopfs bietet der erfindungsgemäße Gelenkkopf 22.2a, 22.2a' mit dem Überstand H, H' des Gelenkkopfendbereichs 22.2b, 22.2b' eine zusätzliche Abstützfläche zwischen den miteinander verbundenen Bauteilen und somit einen erhöhten Widerstand gegenüber den bei einer Aktivierung des Aktuators 20 entstehenden Aufprallkräften. Bei den vorliegenden Ausführungsbeispielen ist das Kopplungsgelenk 22.1, 22.1', 22.2, 22.2' einfarbig ausgeführt und der kegelförmige Überstand H, H' ist nach der Montage bei einer Sichtkontrolle gut sichtbar, wobei der Gelenkkopfendbereich 22.2b, 22.2b' zur besseren Erkennung in Rot oder in einer anderen Signalfarbe ausgeführt sein kann.

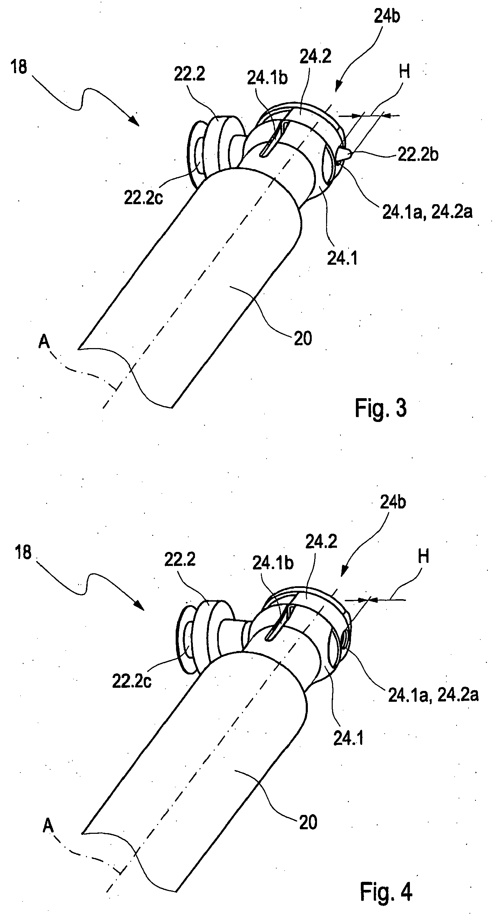

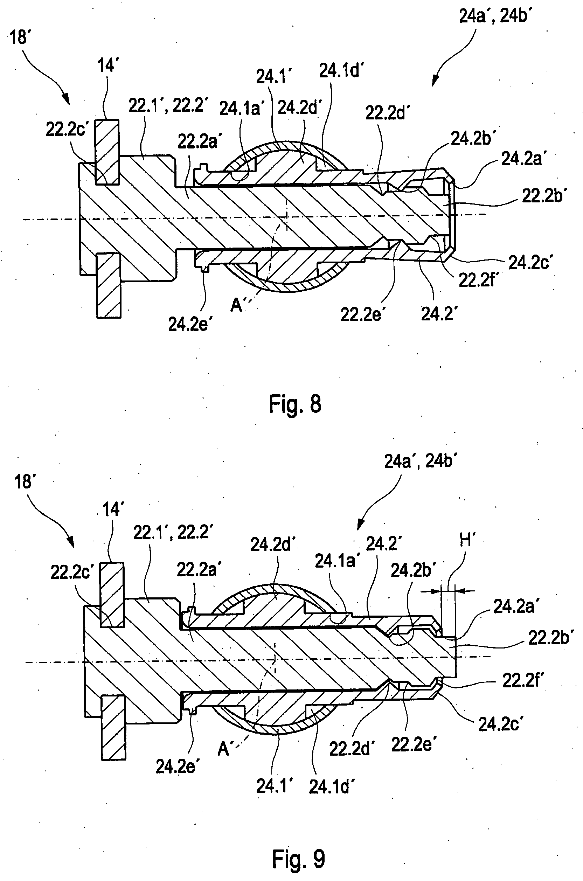

Wie aus Fig. 3 und 9 weiter ersichtlich ist, bildet der Gelenkkopfendbereich 22.2b, 22.2b' mit der Ausnehmung 24.1 a, 24.1a' der Gelenkpfanne 24.1, 24.1' und mit der Ausnehmung 24.2a, 24.2a' des Sicherungselements 24.2, 24.2' in der montierten Stellung zumindest teilweise eine formschlüssige Verrastung aus. Bei einer ordnungsgemäßen Montage des Kopplungsgelenks 22.1, 22.1', 22.2, 22.2' mit der Gelenkpfanneneinheit 24a, 24a', 24b, 24b' gewährleistet die formschlüssige Verrastung vor und während einer Aktivierung des Aktuators 20 stets die richtige Position der miteinander verbundenen Bauteile. Bei einem Austausch oder Reparaturarbeiten kann die formschlüssige Verrastung des Gelenkkopfendbereichs 22.2b, 22.2b' leicht gelöst werden. Die Hauptbelastungsrichtung des Aktuators 20 verläuft in Richtung der Mittellängsachse A, A' bzw. senkrecht zur Symmetrieachse des Kopplungsgelenks 22.1, 22.1', 22.2, 22.2'.

Wie aus Fig. 4, 7 und 8 weiter ersichtlich ist, ist bei einer unsachgemäßen Montage des Gelenkkopfs 22.2a, 22.2a' mit der Gelenkpfanneneinheit 24a, 24a', 24b, 24b' der Gelenkkopfendbereich 22.2b, 22.2b' nicht zu sehen. Hierdurch ergibt sich ein optisch erkennbarer Hinweis darauf, dass der Gelenkkopf 22.2a, 22.2a' nicht ordnungsgemäß mit dem Sicherungselement 24.2, 24.2' montiert bzw. verrastet ist und somit die fehlerhafte Montage behoben werden muss.

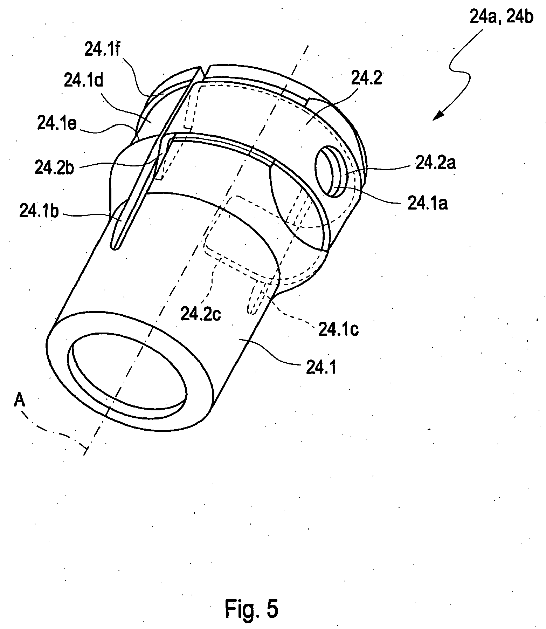

Wie aus Fig. 5 weiter ersichtlich ist, weist die Gelenkpfanne 24.1 im ersten Ausführungsbeispiel am Außenumfang zwei sich gegenüberliegend angeordnete und in Richtung einer Mittellängsachse A verlaufende Schlitze 24.1b, 24.1 c auf, in welche abgewinkelte Enden 24.2b, 24.2c des Sicherungselements 24.2 einrasten. Dadurch ist das Sicherungselement 24.2 in einer definierten Position am Außenumfang der Gelenkpfanne 24.1 zum Gelenkkopf 22.2a montiert und kann diesen ideal umklammern. Als weitere konstruktive und positionsbestimmende Maßnahme weist die Gelenkpfanne 24.1 eine am Außenumfang radial umlaufende Arretierungsausnehmung 24.1d auf, in welcher das Sicherungselement 24.2 formschlüssig und/oder kraftschlüssig axial arretiert werden kann. Dadurch verhindern die begrenzenden Anschläge 24.1e, 24.1f der Arretierungsausnehmung 24.1d, zusätzlich zur Arretierung des Gelenkkopfs 22.2a über den Gelenkkopfendbereich 22.2b, sowohl eine Bewegung des Sicherungselements 24.2 als auch des Gelenkkopfs 22.2a in axialer Richtung der Mittellängsachse A. Der Aktuator 20 kann dadurch lediglich um die Symmetrieachse des Kugelgelenks 22.1, 22.2 eine Drehbewegung ausführen, wodurch sich die Stelleinrichtung 18 stets in einer vorbestimmten definierten Position zur Frontklappe 16 befindet. Zudem ist das Sicherungselement 24.2 auf Grund seiner Federwirkung optimal in der radial umlaufenden Arretierungsausnehmung 24.1 d gelagert und kann nicht selbständig herausfallen.

Wie aus Fig. 6 bis 9 weiter ersichtlich ist, weist im zweiten Ausführungsbeispiel die Gelenkpfanne 24.1' zur Aufnahme des Sicherungselements 24.2' eine am Innenumfang radial umlaufende Arretierungsausnehmung 24.1d' auf, in welche eine radial umlaufende Auswölbung 24.2d' des Sicherungselements 24.2' formschlüssig und/oder kraftschlüssig gelagert und axial arretiert ist. Da die kugelförmige Gelenkpfanne 24.1' das Sicherungselement 24.2' umschließt und gegen Herausfallen sichert, ist das Sicherungselement 24.2' innerhalb der Gelenkpfanne 24.1' in einer definierten Position parallel und senkrecht zur Mittellängsachse A' des Aktuators 20 gelagert. Das Sicherungselement 24.2' weist an einer dem Kopplungsgelenk 22.1', 22.2' zugewandten Seite eine umlaufende Nase 24.2e' auf, welche als Anschlag für eine positionsgenaue Montage auf das Kopplungsgelenk 22.1', 22.2' und als zusätzliche Sicherung gegen Herausfallen aus der Gelenkpfanne 24.1' dient. Das der Nase 24.2e' gegenüberliegende Ende des Sicherungselements 24.2' weist am Innenumfang zwei radial nach innen gerichtete umlaufende Verriegelungsringe 24.2b' ,24.2c' auf, die in Wirkverbindung mit dem Gelenkkopfendbereich 22.2b' des Gelenkkopfs 22.2a' stehen, wobei der innerhalb des Sicherungselements 24.2' liegende Verriegelungsring 24.2b' V-förmig ausgebildet ist und der Verriegelungsring 24.2c' als vorstehende Nase an der Stirnseite des Sicherungselements 24.2' angeordnet ist.

Der Gelenkkopfendbereich 22.2b' des Gelenkkopfs 22.2a' weist am Außenumfang mindestens eine radial umlaufende Vertiefung 22.2d', 22.2e', 22.2f auf, in welche ein am Innenumfang des Sicherungselements 24.2' radial umlaufender Verriegelungsring 24.2b', 24.2c' einrastet. Wie aus Fig. 7 weiter ersichtlich ist, befinden sich der Gelenkkopf 22.2a' und die Gelenkpfanne 24a', 24b' am Anfang der Montage in einem nicht verriegeltem Zustand. Bei weiterem Montagefortschritt ist in einer ersten Verriegelungsstellung gemäß Fig. 8 der Gelenkkopf 22.2a' bereits mit der Gelenkpfanne 24a', 24b' über den Verriegelungsring 24.2b' des Sicherungselements 24.2' in der Vertiefung 22.2e' des Gelenkkopfs 22.2a' ohne sichtbarem Überstand H' des Gelenkkopfendbereichs 22.2b' verrastet. In einer zweiten Verriegelungsstellung gemäß Fig. 9 ist der Gelenkkopf 22.2a' in der Gelenkpfanne 24a', 24b' korrekt montiert und befindet sich in seiner Endstellung. In dieser Endstellung ist der Verriegelungsring 24.2b' des Sicherungselements 24.2' in der Vertiefung 22.2d' des Gelenkkopfs 22.2a' und der Verriegelungsring 24.2c' des Sicherungselements 24.2' in der Vertiefung 22.2f' des Gelenkkopfs 22.2a' des Sicherungselements mit einem sichtbarem Überstand H' des Gelenkkopfendbereichs 22.2b' verrastet. Bei einer ordnungsgemäßen Montage des Kopplungsgelenks 22.1', 22.2' mit der Gelenkpfanneneinheit 24a', 24b' sind beide Verriegelungsringe 24.2b', 24.2c' des Sicherungselements 24.2', in den Vertiefungen 22.2d' und 22.2f des Gelenkkopfs 22.2a' verrastet und die Nase 24.2e' des Sicherungselements 24.2' befindet sich auf Anschlag mit dem Kopplungsgelenk 22.1', 22.2'. In dieser Verriegelungsstellung des Kopplungsgelenks 22.1', 22.2' ist ein deutlich sichtbarer Überstand H' des Gelenkkopfendbereichs 22.2b' zu erkennen, wodurch stets die richtige Position der miteinander verbundenen Bauteile gewährleistet werden kann.

### BEZUGSZEICHENLISTE

- 10: Fußgängerschutzeinrichtung
- 12: Kopplungseinrichtung
- 14, 14': Karosserie
- 16: Frontklappe
- 18, 18': Stelleinrichtung
- 20: Aktuator
- 22.1, 22.1 22.2, 22.2': Kopplungsgelenk
- 22.2a, 22.2a': Gelenkkopf
- 22.2b, 22.2b': Gelenkkopfendbereich
- 22.2c, 22.2c': Nut
- 22.2d', 22.2e', 22.2f: Vertiefung (Gelenkkopf)
- 24a, 24a', 24b, 24b': Gelenkpfanneneinheit
- 24.1, 24.1': Gelenkpfanne
- 24.1a, 24.1 a': Ausnehmung (Gelenkpfanneneinheit)
- 24.1b, 24.1c: Schlitz
- 24.1 d, 24.1d': Arretierungsausnehmung
- 24.1e, 24.1f: Anschlag (Arretierungsausnehmung)
- 24.2, 24.2': Sicherungselement
- 24.2a, 24.2a': Ausnehmung (Sicherungselement)
- 24.2b, 24.2c: abgewinkeltes Ende (Sicherungselement)
- 24.2b', 24.2c': Verriegelungsring (Sicherungselement)
- 24.2d': Auswölbung (Sicherungselement)

- A, A': Mittellängsachse
- H, H': Überstand

## Patentansprüche

1. Fußgängerschutzeinrichtung für ein Kraftfahrzeug mit einer über mindestens eine Kopplungseinrichtung (12) mit einer Karosserie (14, 14') des Kraftfahrzeugs verbundenen Frontklappe (16) und mindestens einer Stelleinrichtung (18, 18'), durch welche die Frontklappe (16) über mindestens einen Aktuator (20) in eine gegenüber der Karosserie (14, 14') des Kraftfahrzeugs angehobene Schutzstellung bewegbar und in der Schutzstellung fixierbar ist, wobei der mindestens eine Aktuator (20) über ein Kopplungsgelenk (22.1, 22.1', 22.2, 22.2') mit der korrespondierenden Kopplungseinrichtung (12) und der Frontklappe (16) verbunden ist, wobei das Kopplungsgelenk (22.1, 22.1', 22.2, 22.2') einen Gelenkkopf (22.2a, 22.2a') und eine den Gelenkkopf (22.2a, 22.2a') aufnehmende Gelenkpfanneneinheit (24a, 24a', 24b, 24b') umfasst, welche eine Gelenkpfanne (24.1, 24.1') und ein die Gelenkpfanne (24.1, 24.1') zumindest teilweise umschließendes Sicherungselement (24.2, 24.2') aufweist, **dadurch gekennzeichnet, dass** der Gelenkkopf (22.2a, 22.2a') einen Gelenkkopfendbereich (22.2b, 22.2b') aufweist, der mit einer Ausnehmung (24.1 a, 24.1 a', 24.2a, 24.2a') in der Gelenkpfanneneinheit (24a, 24a', 24b, 24b') sichtbar zusammenwirkt.

2. Fußgängerschutzeinrichtung nach Anspruch 1, **dadurch gekennzeichnet, dass** der Gelenkkopfendbereich (22.2b, 22.2b') gegenüber dem Sicherungselement (24.2, 24.2') nach außen einen Überstand (H, H') aufweist.

3. Fußgängerschutzeinrichtung nach einem der Ansprüche 1 bis 2, **dadurch gekennzeichnet, dass** der Gelenkkopfendbereich (22.2b, 22.2b') des Gelenkkopfs (22.2a, 22.2a') einen runden Querschnitt aufweist.

4. Fußgängerschutzeinrichtung nach einem der Ansprüche 1 bis 3, **dadurch gekennzeichnet, dass** der Gelenkkopf (22.2a, 22.2a') mit dem Gelenkkopfendbereich (22.2b, 22.2b') als Kaltfließpressteil ausgeführt ist.

5. Fußgängerschutzeinrichtung nach einem der Ansprüche 1 bis 4, **dadurch gekennzeichnet, dass** der Gelenkkopf (22.2a, 22.2a') und die den Gelenkkopf (22.2a, 22.2a') aufnehmende Gelenkpfanneneinheit (24a, 24a', 24b, 24b') als Steckverbindung ausgeführt sind.

6. Fußgängerschutzeinrichtung nach einem der Ansprüche 1 bis 5, **dadurch gekennzeichnet, dass** die Steckverbindung formschlüssig und/oder kraftschlüssig ausgeführt ist.

7. Fußgängerschutzeinrichtung nach einem der Ansprüche 1 bis 6, **dadurch gekennzeichnet, dass** der Gelenkkopfendbereich (22.2b, 22.2b') mit der Ausnehmung (24.1 a, 24.1 a') der Gelenkpfanne (24.1, 24.1') und mit der Ausnehmung (24.2a, 24.2a') des Sicherungselements (24.2, 24.2') zumindest teilweise eine formschlüssige Verrastung aufweist.

8. Fußgängerschutzeinrichtung nach einem der Ansprüche 1 bis 7, **dadurch gekennzeichnet, dass** die Gelenkpfanne (24.1) am Außenumfang zwei sich gegenüberliegend angeordnete und in Richtung einer Mittellängsachse (A) verlaufende Schlitze (24.1b, 24.1c) aufweist, in welche abgewinkelte Enden (24.2b, 24.2c) des Sicherungselements (24.2) einrasten.

9. Fußgängerschutzeinrichtung nach einem der Ansprüche 1 bis 8, **dadurch gekennzeichnet, dass** die Gelenkpfanne (24.1) eine am Außenumfang radial umlaufende Arretierungsausnehmung (24.1d) aufweist, in welcher das Sicherungselement (24.2) formschlüssig und/oder kraftschlüssig axial arretiert ist.

10. Fußgängerschutzeinrichtung nach einem der Ansprüche 1 bis 7, **dadurch gekennzeichnet, dass** die Gelenkpfanne (24.1') zur Aufnahme des Sicherungselements (24.2') eine am Innenumfang radial umlaufende Arretierungsausnehmung (24.1d') aufweist, in welcher eine radial umlaufende Auswölbung (24.2d') des Sicherungselements (24.2') formschlüssig und/oder kraftschlüssig gelagert und axial arretiert ist.

11. Fußgängerschutzeinrichtung nach Anspruch 10, **dadurch gekennzeichnet, dass** der Gelenkkopfendbereich (22.2b') des Gelenkkopfs (22.2a') am Außenumfang mindestens eine radial umlaufende Vertiefung (22.2d', 22.2e', 22.2f) aufweist, in welche ein am Innenumfang des Sicherungselements (24.2') radial umlaufender Verriegelungsring (24.2c', 24.2d') einrastet.

12. Fußgängerschutzeinrichtung nach einem der Ansprüche 1 bis 11, **dadurch gekennzeichnet, dass** das Kopplungsgelenk (22.1, 22.1 22.2, 22.2') des Aktuators (20) mit der Kopplungseinrichtung (12) und mit der Frontklappe (16) als Steckverbindung ausgeführt ist.

## Claims

1. Pedestrian protecting device for a motor vehicle comprising a front flap (16) connected by at least one coupling device (12) to a body (14, 14') of the motor vehicle and at least one actuating device (18, 18') by means of which the front flap (16) can be moved by at least one actuator (20) into a protective position which is elevated relative to the body (14, 14') of the motor vehicle, and can be fixed in the protective position, wherein the at least one actuator (20) is connected via a coupling joint (22.1, 22.1', 22.2, 22.2') to the corresponding coupling device (12) and the front flap (16), wherein the coupling joint (22.1, 22.1', 22.2, 22.2') comprises a joint head (22.2a, 22.2a') and a joint socket unit (24a, 24a', 24b, 24b') mounting the joint head (22.2a, 22.2a'), which comprises a joint socket (24.1, 24.1') and a securing element (24.2, 24.2') at least partly surrounding the joint socket (24.1, 24.1'), **characterised in that** the joint head (22.2a, 22.2a') comprises a joint head region (22.2b, 22.2b') which cooperates visibly with a recess (24.1a, 24.1a', 24.2a, 24.2a') in the joint socket unit (24a, 24a', 24b, 24b').

2. Pedestrian protecting device according to claim 1, **characterised in that** the joint head end region (22.2b, 22.2b') has a projection (H, H') which projects outwardly relative to the securing element (24.2, 24.2').

3. Pedestrian protecting device according to any one of claims 1 to 2', **characterised in that** the joint head end region (22.2b', 22.2b') of the joint head (22.2a, 22.2a') has a round cross-section.

4. Pedestrian protecting device according to any one of claims 1 to 3, **characterised in that** the joint head (22.2a, 22.2a') with the joint head end region (22.2b, 22.2b') is configured as a cold extruded part.

5. Pedestrian protecting device according to any one of claims 1 to 4, **characterised in that** the joint head (22.2a, 22.2a') and the joint socket unit (24a, 24a', 24b, 24b') receiving the joint head (22.2a, 22.2a') are configured as a plug-in connection.

6. Pedestrian protecting device according to any one of claims 1 to 5, **characterised in that** the plug-in connection is configured to be form-fitting and/or force-fitting.

7. Pedestrian protecting device according to any one of claims 1 to 6, **characterised in that** the joint head end region (22.2b, 22.2b') with the recess (24.1a, 24.1a') of the joint socket (24.1, 24.1') and with the recess (24.21, 24.2a') of the securing element (24.2, 24.2') comprises at least partly a form-fitting latching.

8. Pedestrian protecting device according to any one of claims 1 to 7, **characterised in that** the outer circumference of the joint socket (24.1) comprises two slots (24.1b, 24.1c) arranged opposite one another and extending in the direction of a central longitudinal axis (A), into which slots angled ends (24.2b, 24.2c) of the securing element (24.2) engage.

9. Pedestrian protecting device according to any one of claims 1 to 8, **characterised in that** the joint socket (24.1) comprises a fastening recess (24.1d) running radially on the outer circumference, into which the securing element (24.2) is locked axially in a form-fitting and/or force-fitting manner.

10. Pedestrian protecting device according to any one of claims 1 to 7, **characterised in that** the joint socket (24.1') for mounting the securing element (24.2') comprises a fastening recess (24.1d') running radially on the inner circumference, into which a radially circumferential bulge (24.2d') of the securing element (24.2') is mounted in a form-fitting and/or force-fitting manner and axially fastened.

11. Pedestrian protecting device according to claim 10, **characterised in that** the outer circumference of the joint head end region (22.2b') of the joint head (22.2a') has at least one radially circumferential indentation (22.2d', 22.2e', 22.2f'), into which a locking ring (24.2c', 24.2d') extending radially on the inner circumference of the securing element (24.2') engages.

12. Pedestrian protecting device according to any one of claims 1 to 11, **characterised in that** the coupling joint (22.1, 22.1', 22.2, 22.2') of the actuator (20) together with the coupling device (12) and with the front flap (16) is configured as plug-in connection.

## Revendications

1. Dispositif de protection de piétons pour un véhicule automobile avec un volet frontal (16) relié à une carrosserie (14, 14') du véhicule automobile par l'intermédiaire d'au moins un dispositif de couplage (12) et avec au moins un dispositif de positionnement (18, 18') par lequel le volet frontal (16) peut être déplacé par l'intermédiaire d'au moins un actionneur (20) dans une position de protection surélevée par rapport à la carrosserie (14, 14') du véhicule automobile et peut être fixé dans la position de protection, l'au moins un actionneur (20) étant relié par l'intermédiaire d'une articulation de couplage (22.1, 22.1', 22.2, 22.2') au dispositif de couplage correspondant (12) et au volet frontal (16), l'articulation de couplage (22.1, 22.1', 22.2, 22.2') comprenant une tête d'articulation (22.2a, 22.2a') et une unité de boîtier d'articulation (24a, 24a', 24b, 24b') qui loge la tête d'articulation (22.2a, 22.2a') et qui comporte un boîtier d'articulation (24.1, 24.1') et un élément de sécurité (24.2, 24.2') entourant au moins partiellement le boîtier d'articulation (24.1, 24.1'), **caractérisé en ce que** la tête d'articulation (22.2a, 22.2a') comporte une extrémité d'articulation (22.2b, 22.2b') qui coopère de manière visible avec un évidement (24.1a, 24.1a', 24.2a, 24.2a') dans l'unité de boîtier d'articulation (24a, 24a', 24b, 24b').

2. Dispositif de protection de piétons selon la revendication 1, **caractérisé en ce que** l'extrémité d'articulation (22.2b, 22.2b') comporte un débordement (H, H') vers l'extérieur par rapport à l'élément de sécurité (24.2, 24.2').

3. Dispositif de protection de piétons selon l'une des revendications 1 à 2, **caractérisé en ce que** l'extrémité d'articulation (22.2b, 22.2b') de la tête d'articulation (22.2a, 22.2a') a une section transversale ronde.

4. Dispositif de protection de piétons selon l'une des revendications 1 à 3, **caractérisé en ce que** la tête d'articulation (22.2a, 22.2a') est réalisée avec l'extrémité d'articulation (22.2b, 22.2b') comme une pièce extrudée à froid.

5. Dispositif de protection de piétons selon l'une des revendications 1 à 4, **caractérisé en ce que** la tête d'articulation (22.2a, 22.2a') et l'unité de boîtier d'articulation (24a, 24a', 24b, 24b') qui loge la tête d'articulation (22.2a, 22.2a') sont réalisées comme un assemblage par enfichage.

6. Dispositif de protection de piétons selon l'une des revendications 1 à 5, **caractérisé en ce que** l'assemblage par enfichage est réalisé par concordance de forme et/ou par adhérence.

7. Dispositif de protection de piétons selon l'une des revendications 1 à 6, **caractérisé en ce que** l'extrémité d'articulation (22.2b, 22.2b') comporte au moins partiellement un enclenchement par concordance de forme avec l'évidement (24.1a, 24.1a') du boîtier d'articulation (24.1, 24.1') et avec l'évidement (24.2a, 24.2a') de l'élément de sécurité (24.2, 24.2').

8. Dispositif de protection de piétons selon l'une des revendications 1 à 7, **caractérisé en ce que** le boîtier d'articulation (24.1) comporte sur sa circonférence extérieure deux fentes (24.1b, 24.1c) qui sont agencées en face l'une de autre, qui s'étendent dans la direction d'un axe longitudinal médian (A) et dans lesquelles s'enclenchent des extrémités coudées (24.2b, 24.2c) de l'élément de sécurité (24.2).

9. Dispositif de protection de piétons selon l'une des revendications 1 à 8, **caractérisé en ce que** le boîtier d'articulation (24.1) comporte un évidement de blocage (24.1d) qui fait radialement le tour de la périphérie extérieure et dans lequel l'élément de sécurité (24.2) est bloqué axialement par concordance de forme et/ou par adhérence.

10. Dispositif de protection de piétons selon l'une des revendications 1 à 7, **caractérisé en ce que** le boîtier d'articulation (24.1') comporte, pour loger l'élément de sécurité (24.2'), un évidement de blocage (24.1d') qui fait radialement le tour de la périphérie intérieure et dans lequel un renflement (24.2d') périphérique de l'élément de sécurité (24.2') est monté par concordance de forme et/ou par adhérence et est bloqué axialement.

11. Dispositif de protection de piétons selon la revendication 10, que l'extrémité de tête d'articulation (22.2b') de la tête d'articulation (22.2a') comporte sur sa périphérie extérieure au moins un creux (22.2d', 22.2e', 22.2f') qui en fait radialement le tour et dans lequel s'enclenche un anneau de verrouillage (24.2c', 24.2d') qui fait radialement le tour au niveau de la périphérie intérieure de l'élément de sécurité (24.2').

12. Dispositif de protection de piétons selon l'une des revendications 1 à 11, **caractérisé en ce que** l'articulation de couplage (22.1, 22.1', 22.2, 22.2') de l'actionneur (20) est réalisée avec le dispositif de couplage (12) et avec le volet frontal (16) comme un assemblage par enfichage.
